# NEW EUROPEAN PATENT SPECIFICATION

(11) **EP 3 456 687 B2**
(45) Date of publication and mention of the opposition decision: **14.05.2025**
(45) Mention of the grant of the patent: 06.10.2021
(21) Application number: 17796047.3
(22) Date of filing: 01.05.2017
(51) Int. Cl.: C01F 5/08, C21D 8/12, H01F 1/147, C21D 1/72, C21D 1/70

(54) **MAGNESIUM OXIDE POWDER, AND PRODUCTION METHOD THEREFOR**
MAGNESIUMOXIDPULVER UND HERSTELLUNGSVERFAHREN DAFÜR
POUDRE D'OXYDE DE MAGNÉSIUM ET PROCÉDÉ DE PRODUCTION ASSOCIÉ

(30) Priority: 13.05.2016 JP 2016096904
(43) Date of publication of application: 20.03.2019
(73) Proprietor: Konoshima Chemical Co., Ltd., Osaka-shi, Osaka 550-0011 (JP)
(72) Inventor: KINOSHITA,Tomohito, Mitoyo-shi Kagawa 769-1103 (JP); NAKAMURA,Masashi, Mitoyo-shi Kagawa 769-1103 (JP)
(74) Representative: Plougmann Vingtoft a/s
(86) International application number: PCT/JP2017/017131
(87) International publication number: WO 2017/195686

(56) References cited:
- EP-A1- 0 699 771
- EP-A1- 3 111 957
- JP-A- 2011 127 179
- JP-A- H0 995 737
- JP-A- H06 100 997
- JP-A- H09 256 068
- JP-A- H09 256 068
- JP-A- H1 088 244
- JP-A- H11 158 558
- JP-A- H11 181 525
- JP-B2- 3 356 933
- JP-B2- 5 434 560
- US-A- 4 190 469
- US-A- 4 249 966
- US-A- 4 443 425
- US-A- 5 840 131
- BHIDE V G ET AL: "Investigation of the MgO:Fe system using the Mossbauer effect", JOURNAL OF MATERIALS SCIENCE UK, vol. 4, no. 11, November 1969 (1969-11-01), pages 955 - 961, XP002788946, ISSN: 0022-2461, DOI: https://doi.org/10.1007/BF00555310
- JACEK SZCZERBA ET AL: "Abstract", NUKLEONIKA, vol. 60, no. 1, 1 March 2015 (2015-03-01), WARSAW; PL, pages 143 - 145, XP055677822, ISSN: 0550-3620, DOI: 10.1515/nuka-2015-0024
- ASAKURA K., IWASAWA Y., KURODA H.: "EXAFS AND XANES STUDIES ON THE LOCAL STRUCTURES OF METAL IONS IN METAL DOPED MgO SYSTEMS", ISO 13356 1ST ED., PARIS, FR, vol. 47, no. C8, 1 December 1986 (1986-12-01), FR , pages C8-317 - C8-320, XP055949090, ISSN: 0449-1947, DOI: 10.1051/jphyscol:1986862
- WAYCHUNAS GLENN A.: "Mössbauer, EXAFS, and X-ray diffraction study of Fe3+ clusters in MgO:Fe and magnesiowüstite (Mg, Fe)1-x O- evidence for specific cluster geometries", JOURNAL OF MATERIALS SCIENCE, vol. 18, 1 January 1983 (1983-01-01), pages 195 - 207, XP055949091
- Ashby et. al - Engineering Materials 2, An Introduction to Microstructures, Processing and Design, 2006, p. 183/6
- Smart et. al.. Solid State Chemistry An Introduction, 2005, p. 250/3

## Description

### TECHNICAL FIELD

The present invention relates to a magnesium oxide powder including an Fe element, and a method for producing the powder, and is useful as a technique for improving/rectifying the external appearance of a coat on a grain-oriented electromagnetic steel sheet or such a sheet, the deformation of a coil made of the sheet, and other drawbacks of the sheet.

### BACKGROUND ART

Conventional grain-oriented electromagnetic steel sheets are each generally produced as described hereinafter. For example, a steel slab containing silicon (Si) is subjected to hot rolling, annealing, cold rolling and others to be adjusted into a predetermined sheet thickness. Next, the resultant is subjected to decarbonizing annealing, recrystallizing, and others to form an oxide coat made mainly of SiO₂ onto the surface of the steel sheet. Furthermore, in general, a slurry of an annealing separating agent made mainly of magnesium oxide is painted onto the steel sheet surface; the resultant is dried and subsequently wound into a coil form; and the coil is subjected to finish annealing at a predetermined temperature. At the time of the finish annealing, a reaction is caused between MgO, which is a main component of the annealing separating agent, and the oxide coat, which is formed by the decarbonizing annealing and is made mainly of SiO₂, to form a forsterite (Mg₂SiO₄) coat called a glass coat.

In order to form a glass coat having a uniform and excellent coating performance, as an annealing separating agent in the prior art, Patent Document 1 suggests an annealing separating agent made mainly of MgO and containing an Fe compound. This document Patent Document 1 states that a decarbonized and annealed steel sheet is coated with an annealing separating agent including a MgO species which has a BET specific surface area of 15 to 100 m²/g and a CAA value of 45 to 300 seconds, and including an Fe compound, in which the content of the Fe compound is from 0.15 to 5.0% (in terms of that of Fe). However, as shown in Tables 1 and 2 in Patent Document 1, only when the annealing separating agent contains 0.50% or more of the Fe compound, this proportion being a value converted to that of Fe, a glass-coat-forming effect is obtained. When the agent contains 0.05% of the Fe compound, this proportion being the same, the effect is not obtained.

Patent Document 3 discloses a MgO powder with a Fe addition manufactured by calcination. Patent Document 3 discloses a bivalent compound, such as FeCl₂, added after firing and does not disclose the cluster structure according to the present invention.

Patent Document 4 discloses an annealing separator in which Fe is added in a molar ratio of Mg which is different from the present invention when calculated as the content of Fe-element in the annealing separator (MgO + Fe).

Non-Patent Document 1 discloses the influence of the heat-treatment process on amount and distribution of iron ions in a magnesium oxide lattice and does not disclose the cluster structure according to the present invention.

In the meantime, in order to solve a problem that the internal circumferential shape of a coil is deformed, Patent Document 2 suggests an annealing separating agent made mainly of magnesia (MgO) and containing Fe₂O₃. This document Patent Document 2 states that the coil deformation can be restrained by using an annealing separating agent showing a volume shrinkage factor of 20 to 60% when the coil is annealed at a temperature of 900°C or higher. In other words, as shown in Table 2 in Patent Document 2, it is stated that Fe₂O₃ is added to the annealing separating agent made mainly of MgO. It is therefore understandable that Fe needs to be present in the form of Fe₂O₃ to control the volume shrinkage factor of the annealing separating agent, and further the control of the addition amount thereof is necessary.

### PRIOR ART DOCUMENTS

### PATENT DOCUMENTS

Patent Document 1: JP-A-H09-256068
Patent Document 2: JP-A-2011-127179
Patent Document 3: US 5.840.131 A
Patent Document 4: JP 3356933

### NON-PATENT DOCUMENTS

Non-Patent Document 1: J. Szczerba et al.: "Position of Fe ions in MgO crystalline structure", NUKLEONIKA, vol. 60 (1).

### SUMMARY OF THE INVENTION

### PROBLEMS TO BE SOLVED BY THE INVENTION

However, only by causing an Fe element to be present in the form of Fe₂O₃ in an annealing separating agent and controlling the addition amount thereof as in Patent Document 2, the coating reactivity of MgO cannot be sufficiently made high. Thus, it is difficult to control the external appearance of the coat with a higher precision. In the meantime, in the case of heightening the coating reactivity of the powder to improve the coat external appearance, the powder high in coating reactivity is increased, at the time of annealing the coil, in volume shrinkage factor since the powder is also high in self-sintering reactivity. It is therefore difficult to keep the shape of the coil.

Thus, an object of the present invention is to provide a magnesium oxide powder capable of restraining the deformation of the internal circumferential shape of an annealed coil, and further giving a sufficiently uniform coat external appearance after the annealing; and a method for producing the powder.

### MEANS FOR SOLVING THE PROBLEMS

The inventors have repeatedly made eager investigations to found out newly that when a magnesium oxide powder in which at least a part of an Fe element has a cluster structure is used as an annealing separating agent, the use makes it possible to solve both of the above-mentioned problems together notwithstanding the fact that the powder has a high coating reactivity. Thus, the present invention has been achieved as defined in the appended claims.

Accordingly, the magnesium oxide powder of the present invention is a magnesium oxide powder, comprising (i) an Fe element the valence of which is a trivalence, wherein a content of the Fe element is from 0.04 to 0.20% by weight, and at least a part of the Fe element has a cluster structure, and (ii) a B element in an amount of from 0.05 to 0.50% by weight;
wherein the magnesium oxide powder is having a BET specific surface area of 10 to 40 m²/g.

. In the invention, various physical properties are each a value measured by a method adopted in Examples and others.

The magnesium oxide powder of the present invention makes it possible to restrain the deformation of the internal circumferential shape of an annealed coil, and further give the coil a sufficiently uniform coat external appearance after the annealing of the coil. Unclear are mechanisms for the coil-deformation restraint and the coat-external-appearance improvement. However, the mechanisms would be as follows: about the coat-external-appearance improvement, at least the part of the Fe element in the magnesium oxide powder forms, in crystals of the MgO, the cluster structure. The existence of this element fraction, which has the cluster structure, would cause the powder to act as a catalyst when steel for the coil is fired. Even when a content of the Fe element by percentage is relatively small, such a catalytic effect would cause the MgO to have a high coating reactivity and would promote, when the steel is annealed, a coat-forming reaction, thereby forming a uniform coat. Regarding the coil-deformation restraint, the reactivity of the MgO itself is not required to be made very high since the powder is heightened in coating reactivity by the catalytic effect of Fe. Consequently, the self-sintering reactivity of the MgO is restrained to keep the powder low in volume shrinkage factor. Thus, after the annealing, it would be possible to avoid the matter that the coil turns to a loose coil.

The magnesium oxide powder of the present invention has a BET specific surface area of 10 to 40 m²/g. When the specific surface area is in this range, the powder can have a proper reactivity (activity) to make it possible to restrain the generated amount of defects of the coat while lowering the hydration reactivity of magnesium oxide, and further improve the adhesiveness of the coat. If the activity is too high, magnesium oxide in the magnesium oxide powder easily undergoes a hydration reaction into magnesium hydroxide when the magnesium oxide powder is mixed with water to produce a slurry. Consequently, the state of the atmosphere easily turns uneven. Thus, in the finish annealing step, coat defects, such as pinholes, would be easily generated.

The magnesium oxide powder of the present invention preferably has a volume shrinkage factor of 20 to 80%. When the volume shrinkage factor is in this range, the coil can be isotopically shrunken when annealed, and further the atmospheric gas becomes good in distributability into gaps between steel sheet portions of the coil during the annealing. Thus, the coil easily ensures the uniformity of the inside thereof. Moreover, after the annealing, the coil ensures surface pressure between the steel sheet portions thereof, so that fractional force remains between the steel sheet portions. Consequently, the deformation of the coil can be restrained with a higher certainty. Furthermore, according to the restrainability of the coil deformation, the coil is not hindered from being inserted into a pay-off reel.

The magnesium oxide powder of the present invention includes the Fe element the valence of which is a trivalence. Although details of the cluster structure will be described later, the structure would be a structure in which: from each MgO unit lattice, Mg²⁺ becomes a lattice empty; and instead of the Mg ion, Fe³⁺ is present. It is therefore preferred that the powder includes Fe element, the valence of which is a trivalence, in order to form the cluster structure stably. Moreover, when the powder includes the Fe element, the valence of which is a trivalence, the Fe element can be made into a cluster state at a low concentration, so that the powder can have a high coating reactivity. Thus, the powder is more favorable for attaining compatibility between the coil-deformation restraint and the coat-external-appearance improvement.

Also from a viewpoint described below, it is preferred that the powder includes the Fe element, the valence of which is a trivalence. A forsterite (Mg₂SiO₄) coat would be initially formed, in the finish annealing of the coil, by a reaction between MgO, which is a main component of the magnesium oxide powder, and the oxide coat, which is made mainly of SiO₂ and has been formed by decarbonizing annealing, as shown in a formula (1) described below. At this time, the presence of bivalent Fe (such as FeO) would easily cause a reaction of a formula (2) described below to produce solid solutions of forsterite and fayalite unfavorably. Even when the reaction of the formula (2) is caused, the products are finally turned to forsterite, in which all of Fe atoms have been substituted for Mg atoms, with a rise in the annealing temperature. However, the end of the reaction would be unfavorably delayed. Thus, it can be considered that the presence of bivalent Fe unfavorably makes MgO and SiO₂ low in reactivity therebetween, and in the case of trivalent Fe the reaction of the formula (2) does not advance easily. It is therefore preferred that the powder includes Fe element the valence of which is a trivalence.

2MgO + SiO₂ → Mg₂SiO₄ (1)

, and

xFeO + (2 - x)MgO + SiO₂ → Fe(x)Mg(2 - x) SiO₄ (2)

wherein O < x < 2.

The magnesium oxide powder of the present invention is used preferably as an annealing separating agent for grain-oriented electromagnetic steel sheets. The use of the magnesium oxide powder of the invention, as an annealing separating agent for grain-oriented electromagnetic steel sheets, makes it possible to form a high-quality forsterite coat to improve magnetic properties and insulating properties of the grain-oriented electromagnetic steel sheets.

The method of the present invention for producing a magnesium oxide powder is a method for producing a magnesium oxide powder comprising an Fe element, the valence of which is a trivalence, and a B element, the method comprising:
a step of adding a B compound and an Fe compound to a magnesium hydroxide in an adjusted amount, to obtain a magnesium oxide precursor in which the Fe compound is adjusted to be comprised in an amount of 0.04 to 0.20% by weight of the magnesium oxide powder to be obtained, the amount being an Fe-converted amount, and the B compound is adjusted to be comprised in an amount of from 0.05 to 0.50% by weight of the magnesium oxide powder, the amount being a B-converted amount, and
a step of firing the magnesium oxide precursor to obtain a BET specific surface area of 10 to 40 m²/g, thereby forming a cluster structure in at least a part of the Fe element. By firing the magnesium oxide precursor including the Fe compound in the predetermined amount, and then producing MgO, a cluster structure can be formed in at least one portion of MgO crystals. The presence of the Fe element having such a cluster structure causes the element to act as a catalyst when the powder is fired, so that the powder can promote a coat-forming reaction when the coil is annealed. This manner makes it possible to produce a magnesium oxide powder which can restrain the deformation of the internal circumferential shape of the annealed coil, and which can further give a sufficiently uniform coat external appearance after the annealing. Furthermore, the manner can attain an improvement of such coils in productivity, a stable operation of producing-facilities therefor, an improvement of the resultant products in yield (for example, the prevention of the generation of coil scraps), and others.

In the method of the present invention for producing a magnesium oxide powder, the Fe compound is preferably at least one selected from the group consisting of oxides, hydroxides, carbonates, chlorides, sulfates, sulfides, nitrates, phosphates, and silicates. The use of the above Fe compound makes it possible to form an Fe/MgO cluster to be useful for producing desired advantageous effects.

### BRIEF DESCRIPTION OF THE DRAWINGS

Fig. 1 shows respective Fe XANES spectra (normalized absorption spectra) of Experimental Example 1, and Examples 1 and 5.
Fig. 2 shows respective Fe XANES spectra (normalized absorption spectra) of Comparative Examples 7 and 8.
Fig. 3 shows respective Fe XANES spectra (normalized absorption spectra) of standard samples (Fe, FeO, Fe₂O₃, and Fe₃O₄).
Fig. 4 shows an EXAFS vibration of Experimental Example 1.
Fig. 5 shows a radius vector structural function obtained by Fourier transformation in Experimental Example 1, a solid line thereof and a dotted line representing experimental values and fitting values, respectively.

### MODE FOR CARRYING OUT THE INVENTION

### [Cluster Structure]

The magnesium oxide powder of the present invention is a magnesium oxide powder including an Fe element, wherein at least a part of the Fe element has a cluster structure. The cluster structure means not a structure in which Fe ions are partially substituted for Mg ions (substitutional solid solution) but the matter that in a MgO unit lattice, Fe ions are present in a different site in the lattice to be in an aggregate form. Specifically, Mg²⁺ ions in a MgO unit lattice partially come out into the form of lattice empties (Mg²⁺ defects), and instead of the ions, Fe ions are present in the MgO unit lattice to be in an aggregate form. In this way, a cluster structure (Fe/MgO cluster structure) can be formed. For example, 13 Mg²⁺ ions in a MgO unit lattice come out into the form of lattice empties (Mg²⁺ defects), and instead of the ions, four Fe³⁺ ions are present in an aggregate form at tetrahedral sites in the MgO unit lattice. In this way, a cluster structure (Fe³⁺/MgO cluster structure) can be formed. About such a Fe³⁺/MgO cluster structure, a structural model thereof is suggested in, for example, Fig. 6 in Reference Document 1 (K. Asakura, Y. Iwasawa, H. Kuroda, "EXAFS AND XANES STUDIES ON THE LOCAL STRUCTURES OF METAL IONS IN METAL DOPED MgO SYSTEM", Journal de Physique Colloques, 47, C8-317-C8-320 (1986)). As will be described below, the cluster structure can be specified by XAFS (X-ray absorption fine structure) measurement.

### [XAFS (X-Ray Absorption Fine Structure]

Hereinafter, a brief description will be made about a general X-ray absorption fine structure (XAFS). In the case of measuring the absorbency of a substance while an incident X-ray thereto is changed in photon energy, a rapid rise in the absorbency (X-ray absorption edge) is observed when the incident X-ray energy is equal to a core level of each of atoms constituting the measuring substance. Thereafter, with an increase in the energy of the incident X-ray, it is observed that the absorbency is gently attenuated. For reference, the energy position of the X-ray absorption edge of each element is peculiar to the element. When this spectrum is examined in detail, it is understood that the vicinity of the absorption edge has a spectrum structure showing a large change, and in a region higher in energy than the absorption edge, there is a small but gentle vibration structure.

An absorption edge fine structure making its appearance in a narrow region near the absorption edge is called an XANES (X-ray absorption near edge structure), and a vibration structure making its appearance in a wide region higher in energy than the XANES is called an EXAFS (extended X-ray absorption fine structure). Generally, the two are collectively named an X-ray absorption fine structure (XAFS). The spectrum of the XANES corresponds to the transition of atoms constituting a measuring substance from their core level to their various empty levels. Thus, the electron structure of a central atom, out of the atoms, the symmetry, and other factors are reflected onto the XANES spectrum. Accordingly, information pieces can be gained on the electron state of the atom, such as the valence thereof, and on others. In the meantime, the vibration structure of the EXAFS is caused by an interference effect of electrons emitted to the outside of the atoms by the incident X-ray, and electrons scattered by atoms therearound. Thus, by the measurement of the EXAFS, information pieces can be gained on the number of atoms around the selected central atom (for example, the coordination number), the species of the atoms, the distance between the atoms, and other local microstructures. Accordingly, when the X-ray absorption quantity of the substance is monitored through the XANES or EXAFS, preferably the XANES and EXAFS, information pieces can be more precisely gained on the atomic structure of the substance, and a cluster structure thereof, and others.

In the XAFS, a transmission method, a fluorescence yield method, an electron yield method (such as a partial electron yield method or an entire electron yield method), or such a measuring method is widely used. From the viewpoint of the analysis of information on a bulk, the transmission method, the fluorescence yield method or the like is preferred. In accordance with the concentration of the measuring sample, and others, the transmission method, the fluorescence yield method or the like is appropriately selectable to be used.

The transmission method is a measuring method most faithful to the principle of the XAFS, and is a method of detecting the incident light intensity and the intensity of the X-ray transmitted in a sample to measure the X-ray absorbed dose. Thus, bulk information pieces on the sample are gained. The target compound is generally measured at a concentration not less than a predetermined value (for example, several percent by weight, or more).

On the other hand, when a measurement according to the transmission method cannot be made because of, for example, a low concentration of the target compound, any one of the other measuring methods is usable. For example, the fluorescence yield method is usable for making the measurement. In the fluorescence yield method, only fluorescent X-rays from a target element are measurable, so that the obtained results are hardly affected by elements large in content by percentage. This method is therefore effective for the case of measuring an X-ray absorption spectrum of each element small in content by percentage. Moreover, fluorescent X-rays are strong in transmitting power (small in interaction with any substance), so that fluorescent X-rays generated from the inside of a sample are detectable. Thus, the method is favorable as a method for gaining bulk information pieces. In an energy region of Fe, a measurement of a dilute sample is generally made using the fluorescence yield method. Any spectrum gained by the fluorescence yield method would be essentially equivalent to that yielded by the transmission method.

The electron yield method is a method of radiating X-rays to a sample, and detecting, at the radiation time, an electric current flowing therein. It is therefore necessary that the sample is an electroconductive substance. Moreover, the method is sensitive to the surface of the sample (to give information pieces on a region of the sample from its surface to a depth of several nanometers).

### [Magnesium Oxide Powder]

The magnesium oxide powder of the present invention is made of particles made mainly of magnesium oxide. In order to form a forsterite coat effectively, the proportion of magnesium oxide as a main component is set preferably to 95% or more by weight, more preferably to 98% or more by weight. The powder may contain any impurity component originating from raw materials of the powder. Examples of the component include Na, Al, Si, P, S, Cl, K and Ca.

In order to attain compatibility between the coil-deformation prevention and the coat-external-appearance improvement, the magnesium oxide powder of the present invention includes an Fe element, and at least a partial fragment thereof has a cluster structure. The whole of the Fe element included in the magnesium oxide powder of the invention is not required to be made into a cluster state. As described above, the powder can produce desired advantageous effects as far as at least a partial fragment of the Fe element is made into a cluster state.

The Fe element content in the magnesium oxide powder is from 0.03 to 0.20% by weight of the powder in order for the powder to attain the above-mentioned two themes while maintaining a high coating reactivity. According to the invention, the Fe element is included in the magnesium oxide powder in a proportion from 0.04 to 0.20% by weight, preferably from 0.04 to 0.19% by weight, more preferably from 0.05 to 0.18% by weight in order for the Fe element to be improved in catalytic effect.

About the Fe element included in the magnesium oxide powder of the present invention, the powder may include an Fe element having any valence as far as the Fe element is permitted to be made into a cluster state. The powder preferably includes an Fe element having a trivalence. The Fe element in the powder is preferably an Fe element having a trivalence in order for the Fe element to be made, at a low concentration, made into a cluster state.

The magnesium oxide powder of the present invention includes a B element from the viewpoint of the promotion of the formation of a forsterite coat. The magnesium oxide powder includes the B element in a proportion preferably from 0.05 to 0.50% by weight, more preferably from 0.10 to 0.30% by weight of the powder from the viewpoint of the promotion of the formation of a forsterite coat. The reason why the formation of the forsterite coat is promoted by the matter that the powder includes the B element would be as follows: when the steel sheet is annealed, B makes it possible to lower the viscosity of the inside of the silica glass, so that the glass is smoothly shifted on the surface of the steel sheet to promote reaction between the glass and the magnesium oxide; thus, the produced amount of forsterite is increased.

The magnesium oxide powder of the present invention may be doped with any element other than the above-mentioned elements as far as the element does not damage the advantageous effects of the invention. The powder may contain the element other than the above-mentioned elements as a component originating from raw materials of the powder. The powder may contain the following as the element other than the above-mentioned elements: an alkali metal (such as Li, Na or K) ; an alkaline earth metal (such as Mg, Ca, Sr or Ba) ; or some other element (such as F, Al, Si, P, S, or Cl).

The BET specific surface area of the magnesium oxide powder of the present invention is preferably from 10 to 40 m²/g, more preferably from 12 to 38 m²/g to improve the coating adhesiveness of the powder while restraining the generated amount of defects in the coat. As the BET specific surface area is larger, a more favorable effect is produced for an improvement of the powder in reactivity. However, the powder may undergo a problem about hydratability. Thus, any one of the above-mentioned ranges is preferred. It is preferred to yield the magnesium oxide powder of the present invention by mixing individual magnesium oxide powder products having various BET specific surface areas with each other in order that the coating reactivity (activity) of the powder may be controlled. In this case, the respective BET specific surface areas of the individual products are not particularly limited as far as the BET specific surface area of the mixed product is adjustable to fall within any one of the above-mentioned ranges. Thus, any one of the BET specific surface areas may be outside the range. The BET specific surface area is adjustable in accordance with the firing temperature of a magnesium oxide precursor. The firing temperature is preferably, for example, from about 600 to 1200°C. As the firing temperature is higher, the powder can be made lower in BET specific surface area.

In order to control the coating reactivity (activity) more precisely, the powder may be adjusted to have a preferred specific surface area, for example, by mixing two or more magnesium oxide species having different BET specific surface areas with each other.

The volume shrinkage factor of the magnesium oxide powder of the present invention is preferably from 20 to 80% both inclusive, more preferably 20% or more, and less than 80%, even more preferably from 20 to 70% both inclusive to keep the uniformity of the inside of the coil certainly, and restrain the deformed quantity of the coil. The volume shrinkage factor is adjustable in accordance with the firing temperature of the magnesium oxide. The firing temperature is preferably, for example, from about 600 to 1200°C. As the firing temperature is higher, the powder can be made lower in volume shrinkage factor.

About the magnesium oxide powder of the present invention, the average particle size of the powder in a wet particle size distribution thereof according to a microtrack method is preferably from 0.1 to 50 µm, more preferably from 0.5 to 20 µm inclusive, even more preferably from 0.5 to 5 µm from the viewpoint of a uniform dispersibility of the powder and the control of the volume shrinkage factor. In this DESCRIPTION, the average particle size denotes the cumulative 50% particle size obtained when the particle size distribution thereof is measured by a laser diffraction method. Specifically, the average particle size is as will be described in EXAMPLES. Regarding the average particle size of the magnesium oxide powder of the present invention in the wet particle size distribution thereof, the powder is preferably controlled to contain particles having an average particle size of 45 µm or less in a proportion of 99% or more to restrain the generated amount of coat defects. When the volume shrinkage factor is controlled through the average particle size of the magnesium oxide powder, particles having a larger particle size tend to be smaller in volume shrinkage factor, and mixed particle species tend to be lower in volume shrinkage factor than a mono-dispersive particle species.

### [Method for Producing Magnesium Oxide Powder]

The method of the present invention for producing a magnesium oxide powder is a method for producing a magnesium oxide powder including an Fe element, and includes the step of firing a magnesium oxide precursor including an Fe compound, thereby forming a cluster structure in at least a part of the Fe element. Hereinafter, about the same matter as about the magnesium oxide powder of the invention, descriptions may be appropriately omitted.

The magnesium oxide precursor in the present invention may be produced by a known method. The magnesium oxide precursor is not particularly limited as far as the precursor is fired to produce magnesium oxide. Examples of the precursor include magnesium oxide, magnesium hydroxide, and magnesium carbonate. In order to control the BET specific surface area of the magnesium oxide powder, the use of magnesium hydroxide is preferred. In the case of using, as the magnesium oxide precursor, for example, magnesium hydroxide, the precursor may be produced by a known method.

Examples of the raw material of magnesium include water-soluble magnesium salts, and hydrates thereof. The raw material is preferably, for example, magnesium chloride hexahydrate, magnesium chloride dihydrate, or magnesium chloride anhydride. Other examples of the magnesium raw material include seawater, brine, and bittern.

Examples of the alkaline raw material include alkali metal hydroxides, and alkaline earth metal hydroxides. Examples of the alkali metal hydroxides include sodium hydroxide and potassium hydroxide. Examples of the alkaline earth metal hydroxides include magnesium hydroxide and calcium hydroxide.

Magnesium hydroxide as described above is fired at, for example, about 1000 to 1500°C to produce magnesium oxide, and magnesium oxide is caused to react with water to produce magnesium hydroxide. This compound is then usable as the magnesium oxide precursor. In order to control the coating reactivity of the resultant powder, the method of the present invention may go through a manner of producing magnesium oxide as described above once. In this case, regarding the average particle size of magnesium oxide in the wet particle size distribution thereof, it is preferred to use a known means, such as a ball mill, to pulverize prepared particles to produce particles having an average particle size of 45 µm or less in a proportion of 99% or more in order to disperse the prepared particles uniformly. Magnesium oxide yielded by a known method is also usable. It is preferred to add magnesium oxide to water of about 1 to 100°C temperature to set the magnesium oxide concentration into the range of 10 to 25% by weight.

Magnesium hydroxide yielded as described above may be used, as it is, as the magnesium oxide precursor to advance the process which is being performed into the next step. In this case, an Fe compound, which will be detailed later, is incorporated into the magnesium oxide precursor by, for example, the addition of the compound thereto. In this way, an Fe-compound-incorporated magnesium oxide precursor can be produced. The addition of the Fe compound may be performed at any timing as far as the timing is before final firing of the precursor. Besides the direction addition to the magnesium oxide precursor, the Fe compound may be added to a raw material used in the production of the magnesium oxide precursor.

The Fe compound is not particularly limited as far as the compound includes an Fe element. From the viewpoint of the formation of the cluster structure, the Fe compound is preferably at least one selected from the group consisting of oxides, hydroxides, carbonates, chlorides, sulfates, sulfides, nitrates, phosphates, and silicates. The oxides are preferably iron oxide species such as FeO, Fe₂O₃, and Fe₃O₄. From the viewpoint of the formation of the cluster structure of Fe/MgO, Fe₂O₃, which has a trivalence, is more preferred. Other examples of the Fe compound include hydroxides such as iron hydroxide, carbonates such as iron carbonate, chlorides such as iron chloride, sulfates such as iron sulfate, sulfides such as iron sulfide, nitrates such as iron nitrate, phosphates such as iron phosphate, and silicates such as iron metasilicate and iron silicate. Even when a raw material other than oxides is used as the Fe compound, this raw material is changed to an oxide when the steel concerned is subjected to finish annealing. Thus, this case can produce substantially the same advantageous effects as the case of using an oxide.

By firing an Fe-compound-incorporated magnesium oxide precursor as described above, magnesium oxide can be produced and further a cluster structure can be formed in at least a partial fragment of the Fe element. In the present invention, for the formation of the cluster structure, the Fe compound is incorporated into the magnesium oxide precursor by, for example, the addition of the Fe compound thereto before the firing of the magnesium oxide precursor. The addition may be performed at any timing as far as the timing is before final firing of the precursor. Even when the incorporation of the Fe compound is performed after the firing of the magnesium oxide precursor, no cluster structure can be formed, so that the resultant powder cannot produce desired advantageous effects. The firing temperature is not particularly limited as far as the temperature permits an Fe/MgO cluster structure to be formed in at least one portion of crystals of MgO. The temperature is preferably, for example, from 600 to 1200°C, more preferably from 700 to 1100°C. The BET specific surface area of the powder is adjustable in accordance with the firing temperature. As the firing temperature is higher, the BET specific surface area can be made lower.

In order to make the Fe element into a cluster state to express a catalytic effect, the Fe compound is incorporated into the magnesium oxide powder in an amount of 0.03 to 0.20% by weight of the powder, the amount being an Fe-converted amount. In order to improve the catalytic effect of the Fe element while stabilizing the cluster structure, the Fe compound is incorporated into the magnesium oxide powder in an amount preferably from 0.04 to 0.19% by weight, more preferably from 0.05 to 0.18% by weight of the powder, the amount being an Fe-converted amount. According to the invention, the Fe compound is incorporated into the magnesium oxide powder in an amount of 0.04 to 0.20% by weight of the powder, the amount being an Fe-converted amount.

The present invention incorporates a B compound into the magnesium oxide precursor to promote the coat formation. The method for incorporating the B compound is not particularly limited, and is, for example, a method of adding the B compound to the magnesium oxide precursor in a predetermined content by percentage before firing the magnesium oxide precursor. Preferred examples of the B compound include boric acids, alkali metal salts of boric acids, ammonium borates, alkali metal salts of metaboric acid, and boron dioxide. Boric acid and boric anhydrate are preferred. The B compound is contained in the magnesium oxide powder in an amount preferably from 0.05 to 0.50% by weight, more preferably from 0.07 to 0.3% by weight, the amount being a B-converted amount. Any element compound other than the above-mentioned components may be added to the magnesium oxide powder of the present invention as far as the compound does not damage the advantageous effects of the invention.

### [Annealing Separating Agent for Grain-Oriented Electromagnetic steel Sheet]

The magnesium oxide powder of the present invention is used preferably as an annealing separating agent, more preferably as an annealing separating agent for a grain-oriented electromagnetic steel sheet.

A grain-oriented electromagnetic steel sheet can be generally produced by the following method: a slab for a grain-oriented electromagnetic steel sheet is hot-rolled, and then cold-rolled one time or then cold-rolled two or more rimes to sandwich an intermediate annealing between the hot cooling and (each of) the cold rolling (s) to yield a final cold-rolled sheet. Next, the sheet is subjected to primary recrystallization annealing which also acts as decarbonizing annealing to form an oxide coat made mainly of silica (SiO₂) on the surface of the steel sheet. Thereafter, an annealing separating agent including the magnesium oxide powder of the present invention is uniformly dispersed into water to yield a slurry. This slurry is continuously painted onto the steel sheet using roll coating or spraying, and then the resultant is dried at a predetermined temperature. The dried sheet is then wound into a coil form, and then subjected to finish annealing at a temperature of 900°C or higher. In this way, a forsterite coat (Mg₂SiO₄) can be formed onto the steel sheet surface. In the present invention, the finish annealing is performed at a temperature of 900°C or higher. According to annealing at a temperature lower than 900°C, individual portions of the coil do not adhere closely onto each other; thus, no annealing separating agent is required to be painted onto the coil. Even when an annealing separating agent is painted thereto, the coil would not be easily deformed since the coil is small also in volume shrinkage factor.

In the finish annealing step of these steps, in the state of being wound into the coil form (or causing the coil to stand vertically), the workpiece is heated to a temperature of 800°C or higher to be secondarily recrystallized, so that the resultant coil gains desired magnetic properties. In the finish annealing, the workpiece may be further subjected to annealing at a high temperature of 1200°C to purify the steel sheet against impurities therein. After this finish annealing, the workpiece is subjected to flattening annealing to rectify the coil set. The coil subjected to the finish annealing is in the state of the so-called loose coil. When this coil is horizontally laid (in a down end state), the coil is deformed into a prejudiced flat form so that the short diameter of the coil internal diameter is made shorter. Consequently, the coil cannot be inserted into a payoff reel.

When the magnesium oxide powder of the present invention is used as an annealing separating agent, it is preferred that the deformation quantity (out-of-shape quantity) of the coil from a complete circle state is 50 mm or less in order for the coil to be inserted into a payoff reel.

When the magnesium oxide powder of the present invention is used as an annealing separating agent, regarding the external appearance of the coat, the number of spotted defects in the resultant coat is 10 or less per area of 1000 mm × 1000 mm.

The magnesium oxide powder of the present invention may contain any component to be added to an annealing separating agent. For example, the following may be incorporated into the powder: a reaction aid, an inhibitor aid, a tension-supplying type insulating-coat additive, and/or a between-sheet dew point adjustor in order to form a forsterite coat. Examples of the agent to be added include respective chlorine compounds, oxide compounds, boron compounds, sulfur compounds, and nitride compounds of Mg, Ca, Cu, Fe, Zn, Mn, Zr, Co, Ni, Al, Sn and V. In order to adjust the volume shrinkage factor of the powder into an appropriate range, for example, silica, a silicic acid compound or alumina may be blended into the powder.

### EXAMPLES

Hereinafter, the present invention will be described in detail by way of working examples thereof.

### [Magnesium Oxide Powder Evaluations]

About a magnesium oxide powder yielded in each of Experimental Example, Examples, and Comparative Examples, analyses as will be described below were made. The individual analysis results are shown in Tables 1 and 2.

### (1) BET Specific Surface Area

About a measuring sample pretreated in a nitrogen gas atmosphere at about 130°C for about 30 minutes by use of an octuplet-type preheating unit (manufactured by Mountech Co., Ltd.), the BET specific surface area thereof is measured by a nitrogen gas adsorption method, using an instrument Macsorb HM, model-1208 (manufactured by Mountech Co., Ltd.) as a BET specific surface area measuring instrument.

### (2) XANES (X-ray Absorption Near Edge Structure) Measurement

A beam line and XAFS measuring conditions used therein are shown below. A standard sample and a sample of Experimental Example 1 are measured by the transmission method. However, about other samples, the Fe concentration therein is an Fe concentration unmeasurable by the transmission method. Thus, for the samples, the fluorescence yield method is used. A measurement of a dilute sample in an energy region of Fe is made by the fluorescence yield method. A measurement of an XAFS in the fluorescence method is made in the state that a powdery sample is airtightly sealed in a plastic bag. Produced are, as standard samples, pellets of Fe, FeO, Fe₃O₄, Fe₂O₃, and Experimental Example 1 each diluted with BN (boron nitride), and then transmission XAFS measurements are made.

Beam line: BL-3 in Ritsumeikan University SR Center,
Monochromator: Si (220) double crystal monochromator,
Measuring modes: fluorescence yield method and transmission method,
Measuring program: PF-XAFS,
Measuring energy: Fe K-edge: 7076.2 to 7181.2 eV (0.35 eV step)
Detector: Ar (15) + N₂ (85) 4.5 cm ion chamber (incident light intensity), and
Ar (50) + N₂ (50) 31 cm ion chamber (transmitted light intensity)
three-element Ge semiconductor detector (fluorescence intensity),
Beam size: 2 mm (V) × 4 mm (H), and
Measuring conditions: atmospheric pressure at room temperature.

### (3) EXAFS (Extended X-ray Absorption Fine Structure) Measurement

An EXAFS measurement is made using a machine described below.
Beam line: PF BL-9C (photon factory BL-9C) in High Energy Accelerator Research Organization,
Monochromator: Si (111) double crystal monochromator,
Measuring mode: transmission method,
Measuring program: QXAFS,
Measuring energy: 6606.2 to 8211.2 eV,
Detector: N₂ 17 cm ion chamber (incident light intensity), and
Ar (25) + N₂ (75) 31 cm ion chamber (transmitted light intensity),
Beam size: 1 mm (V) × 1 mm (H), and
Measuring temperature: room temperature.

### (4) Average Particle Size in Wet Particle Size Distribution

In a pre-treatment, 0.01 g of a sample powder is put into a 100 mL beaker, a SOLMIX is put thereinto until the entire volume turns to 50 mL, and then an ultrasonic homogenizer (UD-201, manufactured by Tomy Seiko Co., Ltd.) is used to disperse the powder for 3 minutes. Immediately after the end of the dispersing, the entire volume is put into a circulator (Microtrac VSR, manufactured by the company Honeywell) to analyze the wet particle size distribution with a particle size analyzer (Microtrac HRA, manufactured by the company Honeywell) . The cumulative 50% particle size in the wet particle size distribution is used as the average particle size of the powder.

### [Experimental Example 1]

A measuring sample (magnesium oxide powder) was produced as will be described below, using the same method as in Reference Document 1 (K. Asakura, Y. Iwasawa, H. Kuroda, "EXAFS AND XANES STUDIES ON THE LOCAL STRUCTURES OF METAL IONS IN METAL DOPED MgO SYSTEM", Journal de Phyisique Colloques, 47, C8-317-C8-320 (1986)).

Into 20 mL of pure water was dissolved 7.23 g of iron nitrate nonahydrate, and then 20.0 g of a MgO reagent (manufactured by Wako Pure Chemical Industries, Ltd.; purity: 99.9%) was added thereto. The resultant was stirred, and then dried at 120°C for 8 hours. After the drying, the resultant was pulverized in a mortar, and 10 g of the resultant powder was put into a crucible made of alumina. The powder was then fired under N₂ reduction at 600°C for 5 hours. The fired body was cooled and then pulverized in a mortar to produce a measuring sample (magnesium oxide powder).

### [Example 1]

Seawater and hydrated lime were caused to react with each other at a ratio by mole of Mg²⁺ / OH⁻ of 1/1.8. The resultant magnesium oxide (Mg(OH)₂) was fired at 1400°C, and the fired body was pulverized in a ball mill to set the proportion of a 45µm-pass fragment thereof to 99% or more. In this way, MgO was yielded. The powder MgO was added to water of 50°C temperature to give a concentration of 15% by weight to yield Mg(OH)₂. Boric acid was added to the resultant Mg(OH)₂ to adjust the concentration of boron (B element) in MgO to 0.2% by weight, and Fe₂O₃ was added thereto to adjust the concentration of iron (Fe element) in MgO to 0.10% by weight. Thereafter, in a Lindbergh electric furnace, the resultant was fired with a temperature change, so as to set the BET specific surface area thereof as shown in Table 1. The fired body was then pulverized to produce a magnesium oxide powder.

### [Examples 2 to 3]

In each of the examples, a magnesium oxide powder was produced in the same manner as in Example 1 except that in Example 1, the B/Fe added magnesium hydroxide was fired in the Lindbergh electric furnace to give a BET specific surface area shown in Table 1.

### [Example 4] (not according to the invention)

Magnesium chloride and NaOH were caused to react with each other at a ratio by mole of Mg²⁺ / OH⁻ of 1/1.9 and then maintained at 180°C for 5 hours to yield Mg(OH)₂. Boric anhydride was added to the resultant Mg(OH)₂ to adjust the concentration of boron (B element) in MgO to 0.25% by weight, and Fe₂O₃ was added thereto to adjust the concentration of iron (Fe element) in MgO to 0.03% by weight. Thereafter, in a Lindbergh electric furnace, the resultant was fired with a temperature change, so as to set the BET specific surface area thereof as shown in Table 1. The fired body was then pulverized to produce a magnesium oxide powder.

### [Example 5]

Magnesium chloride and hydrated lime were caused to react with each other at a ratio by mole of Mg²⁺ / OH⁻ of 1/1.8 and then maintained at 150°C for 8 hours to yield Mg(OH)₂. Boron nitride was added to the resultant Mg(OH)₂ to adjust the concentration of boron (B element) in MgO to 0.20% by weight, and Fe₂O₃ was added thereto to adjust the concentration of iron in MgO to 0.18% by weight. Thereafter, in a Lindbergh electric furnace, the resultant was fired with a temperature change, so as to set the BET specific surface area thereof as shown in Table 1. The fired body was then pulverized to produce a magnesium oxide powder.

### [Comparative Example 1]

Seawater and hydrated lime were caused to react with each other at a ratio by mole of Mg²⁺ / OH⁻ of 1/1.8. The resultant magnesium oxide (Mg(OH)₂) was fired at 1400°C, and the fired body was pulverized in a ball mill to set the proportion of a 45µm-pass fragment thereof to 99% or more. In this way, MgO was yielded. The powder MgO was added to water of 50°C temperature to give a concentration of 15% by weight to yield Mg(OH)₂. Boric acid was added to the resultant Mg (OH)₂ to adjust the concentration of boron in MgO to 0.20% by weight. Thereafter, in a Lindbergh electric furnace, the resultant was fired to set the BET specific surface area thereof to 50 m²/g. The fired body was then pulverized. Into this MgO powder was added F₂O₃ to set the concentration of iron in MgO into 0.10% by weight to produce a magnesium oxide powder.

### [Comparative Example 2]

A magnesium oxide powder was produced in the same manner as in Comparative Example 1 except that in Comparative Example 1, the B added magnesium hydroxide was fired in the Lindbergh electric furnace to give a BET specific surface area shown in Table 1.

### [Comparative Example 3]

Magnesium chloride and NaOH were caused to react with each other at a ratio by mole of Mg²⁺ / OH⁻ of 1/1.9 and then maintained at 180°C for 5 hours to yield Mg(OH)₂. Boric anhydride was added to the resultant Mg(OH)₂ to adjust the concentration of boron in MgO to 0.25% by weight. Thereafter, in a Lindbergh electric furnace, the resultant was fired with a temperature change, so as to set the BET specific surface area thereof as shown in Table 1. The fired body was then pulverized to produce a magnesium oxide powder.

### [Comparative Example 4]

A magnesium oxide powder was produced in the same manner as in Comparative Example 3 except that in Comparative Example 3, Fe₂O₃ was added to B added magnesium hydroxide to set the concentration of iron in MgO to 0.25% by weight, and then the resultant was fired.

### [Comparative Example 5]

A magnesium oxide powder was produced in the same manner as in Comparative Example 3 except that after the firing in Comparative Example 3, Fe₂O₃ was added to the fired product to set the proportion of iron in MgO into 0.10% by weight.

### [Comparative Example 6]

A magnesium oxide powder was produced in the same manner as in Comparative Example 3 except that after the firing in Comparative Example 3, FeO was added to the fired product to set the proportion of iron in MgO into 0.10% by weight.

### [Comparative Example 7]

Seawater and hydrated lime were caused to react with each other at a ratio by mole of Mg²⁺ / OH⁻ of 1/1.8. The resultant magnesium hydroxide (Mg(OH)₂) was fired at 1400°C, and the fired body was pulverized in a ball mill to set the proportion of a 45µm-pass fragment thereof to 99% or more. In this way, MgO was yielded. The powder MgO was added to water of 50°C temperature to give a concentration of 15% by weight. In this way, Mg(OH)₂ was yielded. Boric acid was added to the resultant Mg(OH)₂ to adjust the concentration of boron in MgO to 0.2% by weight. Thereafter, in a Lindbergh electric furnace, the resultant was fired with a temperature change to set the BET specific surface area thereof as shown in Table 1. The fired body was then pulverized. Thereafter, FeO was added into the pulverized product to set the proportion of iron in MgO to 0.10% by weight to produce a magnesium oxide powder.

### [Comparative Example 8]

A magnesium oxide powder was produced in the same way as in Comparative Example 7 except that in Comparative Example 7, Fe₂O₃ was used instead of FeO.

### [Evaluations of Each of Powders, Using Grain-Oriented Electromagnetic Steel Sheet]

The magnesium oxide powder yielded in each of the working examples and comparative examples was used as an annealing separating agent for a grain-oriented electromagnetic steel sheet to make analyses as will be described below. The analysis results are each shown in Table 1.

### (4) Volume Shrinkage Factor

Two grams of the magnesium oxide powder was pressed at a pressure of 200 kgf/cm² (19.6 MPa) to be shaped into a disc having a diameter of 20 mm. The resultant was supplied to a measurement. Firing was performed in a nitrogen atmosphere at 1200°C for 20 hours. The volume shrinkage factor (%) of the powder was calculated as described below, and estimated. Volume shrinkage factor (%) = ("volume of the powder before the firing" - "volume thereof after the firing") / "volume of the powder before the firing" × 100

### (5) Coil Deformation Quantity

A slab for an electromagnetic steel sheet was heated to 1200°C, this sheet having a composition of C: 0.045% by mass, Si: 3.25% by mass, Mn: 0.070% by mass, Al: 80 ppm, N: 40 ppm and S: 20 ppm, and the balance composed of Fe and inevitable impurities. The slab was then hot-rolled to produce a hot-rolled sheet of 2.2 mm thickness. This hot-rolled sheet was annealed at 1000°C for 30 seconds to remove scales on the surface of the steel sheet. Next, a tandem rolling machine was used to cold-roll the sheet to be adjusted into a final sheet thickness of 0.30 mm. Thereafter, the sheet was subjected to a primary recrystallizing annealing of keeping the sheet at a thermally homogenizing temperature of 850°C for 90 seconds, this annealing acting also as a decarbonizing annealing. The magnesium oxide powder yielded in each of the working examples and the comparative examples was uniformly dispersed into water to yield a slurry. This slurry was painted onto the steel sheet, and the sheet was wound into the form of a coil having an internal diameter of 500 mm and an external diameter of 1000 mm. This coil was caused to stand vertically, and subjected to a finish annealing of heating the coil up to 1200°C at a rate of 25°C/hour. Thereafter, the coil was set into a horizontally laid state. After 60 minutes elapsed from the time of setting the coil into the horizontally laid state, the internal diameter in the vertical (diameter) direction was measured, and the deformation quantity (mm) of the coil was calculated as described below. If the coli deformation quantity exceeds 50 mm, the coil cannot be inserted into a payoff reel. The coil deformation quantity (mm) = "initial internal diameter (500 mm) " - "internal diameter (mm) after 60 minutes elapse"

### (6) Coat Eternal Appearance

After the same steps as in item (5), the external appearance of the coat was visually observed. The number (per size of 1000 mm × 1000 mm) of spotted defects (bare spots) of the coat made of gray forsterite, was counted to judge the coat external appearance as described below.

Zero: ⊙,
1 to 4: ○
5 to 10: Δ, and
11 or more: ×.

Results of the above-mentioned analysis and evaluations are shown in Tables 1 to 2.

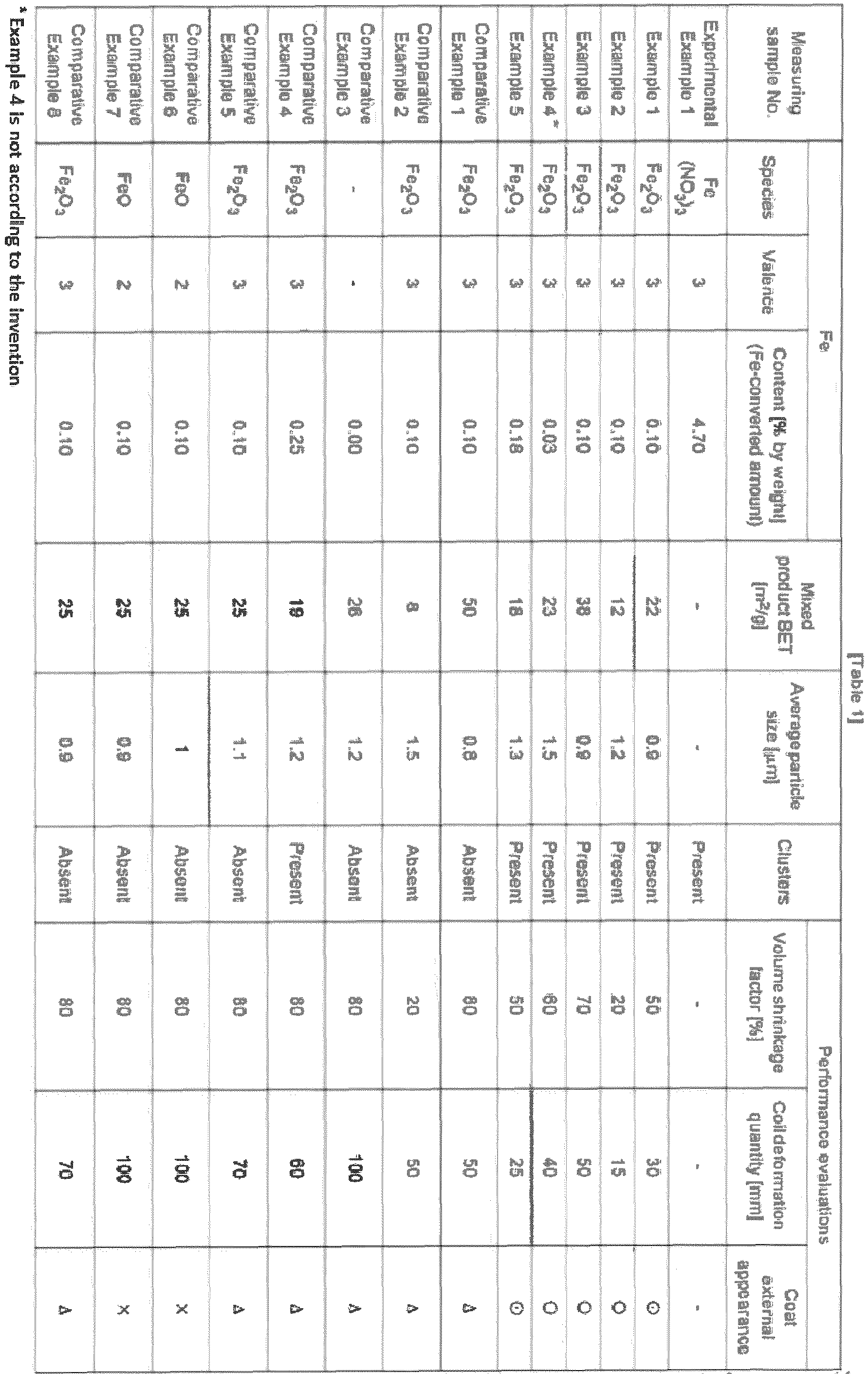

**[Table 2]**

| Interaction | C.N. | r/Å |
|---|---|---|
| Fe - O | 3.9 ± 0.9 | 1.97 ± 0.02 |
| Fe - Fe | 1.9 ± 2.5 | 3.06 ± 0.05 |
| Fe - Mg | 3.3 ± 2.9 | 3.33 ± 0.03 |

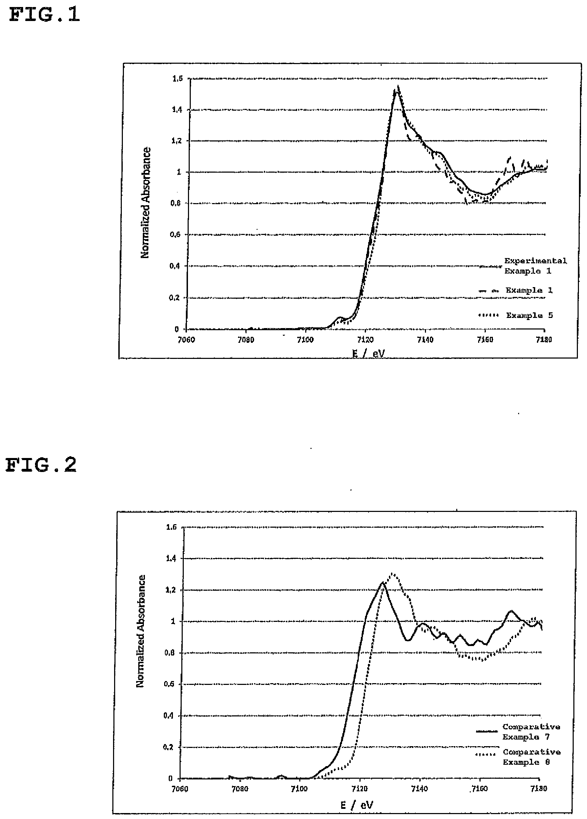

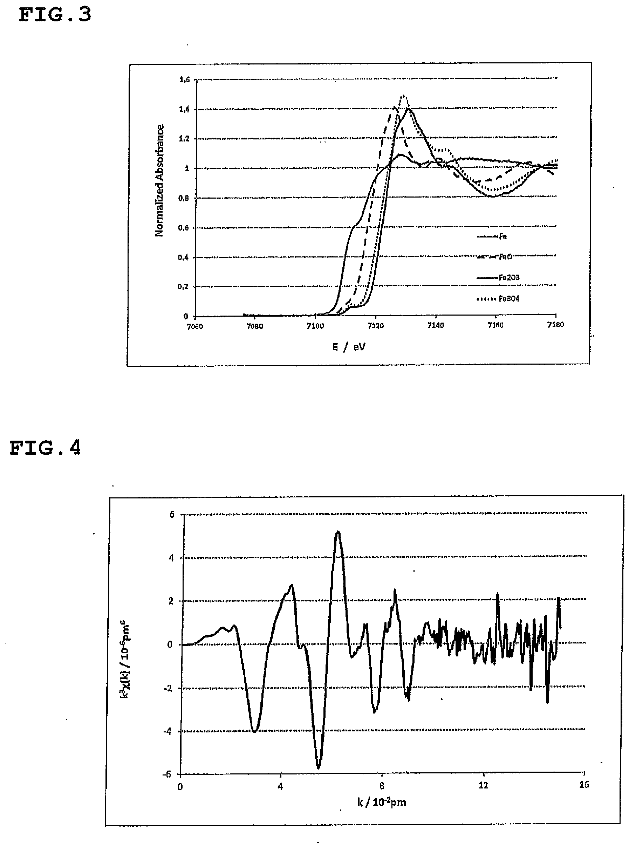

Fig. 1 shows respective Fe XANES spectra (normalized absorption spectra) of Experimental Example 1 and Examples 1 and 5. Fig. 2 shows respective Fe XANES spectra (normalized absorption spectra) of Comparative Examples 7 and 8. Fig. 3 shows respective Fe XANES spectra (normalized absorption spectra) of standard samples (Fe, FeO, Fe₂O₃, and Fe₃O₄). The word "normalize" or "normalization" means that a coefficient is multiplied to converge the absorption spectrum of a sample after its absorption edge into 1.

Under a condition that an energy which permits the absorbance of a sample after the normalization to be 0.5 is defined as the absorption edge energy of the sample, the absorption edge energy in Fig. 1 and that in Fig. 3 are compared with each other. The shape of an XANES spectrum of Experimental Example 1 in Fig. 1 is substantially equal to an XANES spectrum of each of Examples 1 and 5. Thus, these can be judged to be the same as each other in electron states (for example, valence) . Thus, hereinafter, Example 1 is used to make a specific description. The energy which permits the absorbance after the normalization to be 0.5 is 7121.0 eV in Example 1. This value is consistent with a value 7121.1 eV of Fe₂O₃, which is trivalent, within an experimental accidental error range. The value of FeO, which is a bivalent standard sample, is 7116.9 eV, and that of Fe₃O₄, the average oxidation number of which is a valence of 2.7, is 7120.0 eV; thus, the oxidation state of Fe included in Example 1 would be trivalent. Accordingly, the oxidation state of Fe in each of Experimental Example 1 and Example 5, which has substantially the same XANES spectrum as Example 1, would be trivalent.

Next, a comparison is made between respective XANES spectrum patterns in Figs. 1 and 3. When the XANES spectrum patterns are compared therebetween, the chemical state of the samples can be estimated. The XANES spectrum yielded in Example 1 is not consistent with any one of the spectra of the standard samples (Fe, FeO, Fe₂O₃ and Fe₃O₄). Thus, Example 1 would therefore have a chemical state different from those of the standard samples (Fe, FeO, Fe₂O₃ and Fe₃O₄). Experimental Example 1 and Example 5, which each have substantially the same XANES spectrum as Example 1, would also have a chemical state different from those of the standard samples (Fe, FeO, Fe₂O₃ and Fe₃O₄).

In the meantime, a comparison is made between respective XANES spectrum patterns in Figs. 2 and 3. Comparative Examples 7 and 8 show the same XANES spectra as FeO and Fe₂O₃, this situation being different from the situation of Example 1. In other words, Comparative Example 7, to which FeO is added after the firing, shows the same XANES spectrum as one (FeO) of the standard samples, and Comparative Example 8, to which Fe₂O₃ is added after the firing, shows the same XANES spectrum as one (Fe₂O₃) of the standard samples. It can be therefore considered that only by the addition of FeO and Fe₂O₃ after the firing, no cluster structure is formed so that chemical states of these oxides are maintained.

The XANES spectrum patterns of Examples 1 and 5 are not consistent with any one of the spectra of the standard samples (Fe, FeO, Fe₂O₃ and Fe₃O₄), but are considerably consistent with an Fe XANES spectrum pattern in Reference Document 1. Reference Document 1 states that Fe³⁺ forms a cluster structure in MgO (the structure is shown as Fe³⁺/MgO). A structural model thereof is suggested in Fig. 6 in Reference Document 1. It can be therefore presumed that Examples 1 and 5 have the same chemical state (cluster structure) as Fe³⁺/MgO. In order to support this presumption, a measuring sample (Experimental Example 1) was produced in the same way as in Reference Document 1 to measure its EXAFS.

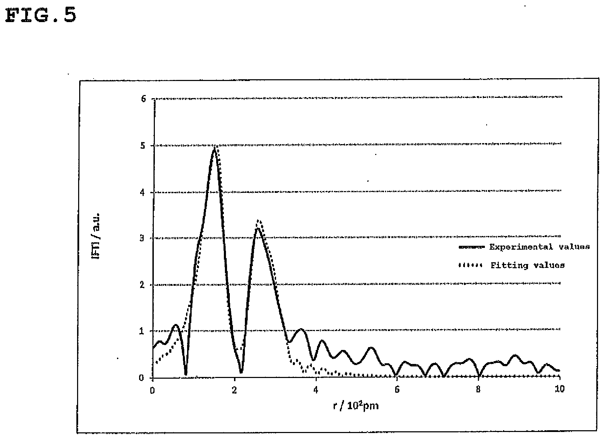

Fig. 4 shows an EXAFS vibration of Experimental Example 1. Fig. 5 shows a radius vector structural function obtained by Fourier transformation in Experimental Example 1. In Fig. 5, a solid line of the radius vector structural function and a dotted line thereof represent experimental values and fitting values, respectively. Table 2 shows each coordination number C.N., and the corresponding interatomic bonding distance "r". The result of the EXAFS analysis about Experimental Example 1 makes it evident that four O atoms are coordinated nearest to Fe, and Fe (3.1 Å) and Mg (3.3 Å) are coordinated in the next-nearest neighbor. Both of Fe-Fe and Fe-Mg are present so that Fe would take a cluster structure in magnesium oxide. According to this matter, also about Examples 1 and 5 each having substantially the same XANES spectrum as Experimental Example 1, Fe would take a cluster structure in magnesium oxide.

As shown by the results in Table 1, about the magnesium oxide powder of each of Examples 1 to 5 (Example 4 is not according to the invention), which contains, in an amount in the predetermined range, the Fe element having such a cluster structure, the internal circumstantial shape of the annealed coil can be restrained from being deformed, and further the coil can gain a sufficiently uniform coat external appearance after the annealing. In contrast, Comparative Examples 3 and 5 to 8 having no cluster structure produce no desired advantageous effects about the coil-deformation quantity and the coat external appearance. If the Fe amount is too large as in Comparative Example 4, the coil unfavorably becomes large in coil-defamation quantity, and spotted defects are verified in the coat external appearance not to produce good results. If the Fe amount is too small as in Comparative Example 3, the coil unfavorably becomes very large in coil-defamation quantity, and spotted defects are verified in the coat external appearance not to produce good results. Furthermore, if the addition of the Fe compound is performed after the magnesium oxide precursor is fired as in Comparative Examples 7 and 8, no cluster structure can be formed, the coil unfavorably becomes large in coil-defamation quantity, and spotted defects are verified in the coat external appearance not to produce good results. If only the addition of the Fe compound is performed after the firing in Comparative Examples 1 and 2, no cluster structure can be formed not to produce good results.

## Claims

1. A magnesium oxide powder, comprising
(i) an Fe element the valence of which is a trivalence, wherein a content of the Fe element is from 0.04 to 0.20% by weight, and at least a part of the Fe element has a cluster structure, and
(ii) a B element in an amount of from 0.05 to 0.50% by weight;
wherein he magnesium oxide powder is having a BET specific surface area of 10 to 40 m²/g.

2. The magnesium oxide powder according to claim 1, having a volume shrinkage factor of 20 to 80%.

3. The magnesium oxide powder according to any one of claims 1 to 2, which is used as an annealing separating agent for grain-oriented electromagnetic steel sheets.

4. A method for producing a magnesium oxide powder comprising an Fe element, the valence of which is a trivalence, and a B element, the method comprising:
a step of adding a B compound and an Fe compound to a magnesium hydroxide in an adjusted amount, to obtain a magnesium oxide precursor in which the Fe compound is adjusted to be comprised in an amount of 0.04 to 0.20% by weight of the magnesium oxide powder to be obtained, the amount being an Fe-converted amount, and the B compound is adjusted to be comprised in an amount of from 0.05 to 0.50% by weight of the magnesium oxide powder, the amount being a B-converted amount, and
a step of firing the magnesium oxide precursor to obtain a BET specific surface area of 10 to 40 m²/g, thereby forming a cluster structure in at least a part of the Fe element.

5. The method for producing a magnesium oxide powder according to claim 4, wherein the Fe compound is at least one selected from the group consisting of oxides, hydroxides, carbonates, chlorides, sulfates, sulfides, nitrates, phosphates, and silicates.

## Patentansprüche

1. Magnesiumoxidpulver, umfassend
(i) ein Fe-Element, dessen Wertigkeit eine Dreiwertigkeit ist, wobei ein Gehalt des Fe-Elements 0,04 bis 0,20 Gew.-% beträgt und zumindest ein Teil des Fe-Elements eine Cluster-Struktur aufweist, und
(ii) ein B-Element mit einer Menge von 0,05 bis 0,50 Gew.-%;
wobei das Magnesiumoxidpulver einen BET-spezifischen Oberflächenbereich von 10 bis 40 m²/g aufweist.

2. Magnesiumoxidpulver nach Anspruch 1 mit einem Volumenschrumpfungsfaktor von 20 bis 80 %.

3. Magnesiumoxidpulver nach einem der Ansprüche 1 bis 2, das als ein Trennmittel beim Glühen von kornorientierten Blechen aus elektromagnetischem Stahl verwendet wird.

4. Verfahren zum Herstellen eines Magnesiumoxidpulvers umfassend ein Fe-Element, dessen Wertigkeit eine Dreiwertigkeit ist, und ein B-Element, wobei das Verfahren Folgendes umfasst:
einen Schritt des Hinzufügens einer B-Verbindung und einer Fe-Verbindung zu einem Magnesiumhydroxid in einer angepassten Menge, um eine Magnesiumoxid-Vorläuferverbindung zu erhalten, in der die Fe-Verbindung dazu angepasst ist, in einer Menge von 0,04 bis 0,20 Gew.-% des zu erhaltenden Magnesiumoxidpulvers enthalten zu sein, wobei die Menge eine Fe-umgewandelte Menge ist, und die B-Verbindung dazu angepasst ist, in einer Menge von 0,05 bis 0,50 Gew.-% des Magnesiumoxidpulvers enthalten zu sein, wobei die Menge eine B-umgewandelte Menge ist, und
einen Schritt des Brennens der Magnesiumoxid-Vorläuferverbindung, um einen BET-spezifischen Oberflächenbereich von 10 bis 40 m²/g zu erhalten, wodurch eine Cluster-Struktur in zumindest einem Teil des Fe-Elements gebildet wird.

5. Verfahren zum Herstellen eines Magnesiumoxidpulvers nach Anspruch 4, wobei die Fe-Verbindung zumindest eine ausgewählt aus der Gruppe bestehend aus Oxiden, Hydroxiden, Carbonaten, Chloriden, Sulfaten, Sulfiden, Nitraten, Phosphaten und Silikaten ist.

## Revendications

1. Poudre d'oxyde de magnésium, comprenant
(i) un élément Fe dont la valence est une trivalence, une teneur en élément Fe allant de 0,04 à 0,20 % en poids, et au moins une partie de l'élément Fe possédant une structure en grappe, et
(ii) un élément B en une quantité allant de 0,05 à 0,50 % en poids ;
ladite poudre d'oxyde de magnésium possédant une surface spécifique BET de 10 à 40 m²/g.

2. Poudre d'oxyde de magnésium selon la revendication 1, possédant un facteur de retrait volumique de 20 à 80 %.

3. Poudre d'oxyde de magnésium selon l'une quelconque des revendications 1 à 2, qui est utilisée en tant qu'agent de séparation de recuit pour des tôles d'acier électromagnétiques à grains orientés.

4. Procédé permettant la production d'une poudre d'oxyde de magnésium comprenant un élément Fe, dont la valence est une trivalence, et un élément B, le procédé comprenant :
une étape d'ajout d'un composé B et d'un composé Fe à un hydroxyde de magnésium dans une quantité réglée, pour obtenir un précurseur d'oxyde de magnésium dans lequel le composé Fe est réglé pour être compris en une quantité de 0,04 à 0,20 % en poids de la poudre d'oxyde de magnésium à obtenir, la quantité étant une quantité convertie de Fe, et le composé B est réglé pour être compris en une quantité de 0,05 à 0,50 % en poids de la poudre d'oxyde de magnésium, la quantité étant une quantité convertie de B, et
une étape de cuisson du précurseur d'oxyde de magnésium pour obtenir une surface spécifique BET de 10 à 40 m²/g, formant ainsi une structure en grappe dans au moins une partie de l'élément Fe.

5. Procédé permettant la production d'une poudre d'oxyde de magnésium selon la revendication 4, ledit composé Fe étant au moins un composé choisi dans le groupe constitué par des oxydes, des hydroxydes, des carbonates, des chlorures, des sulfates, des sulfures, des nitrates, des phosphates et des silicates.
